# FASCICULE DE BREVET EUROPEEN

(11) **EP 1 210 608 B1**
(45) Date de publication et mention de la délivrance du brevet: **14.05.2003**
(21) Numéro de dépôt: 00958723.9
(22) Date de dépôt: 23.08.2000
(51) Int. Cl.: G01P 3/00

(54) **CAPTEUR DE DEBIT D'UN FLUX GAZEUX**
DURCHFLUSSMESSER FÜR GASSTRÖMUNG
GAS FLOW SENSOR

(30) Priorité: 24.08.1999 FR 9910881
(43) Date de publication de la demande: 05.06.2002
(73) Titulaire: Centre National De La Recherche Scientifique, 75794 Paris Cedex 16 (FR)
(72) Inventeur: GAUTIER, Bertrand, F-38660 Saint Bernard Du Touvet (FR); CHAUSSY, Jacques, F-38130 Echirolles (FR); BRET, Jean-Louis, F-38180 Seyssins (FR)
(74) Mandataire: de Beaumont, Michel
(86) Numéro de dépôt international: FR0002358
(87) Numéro de publication internationale: WO01014891

(56) Documents cités:
- DE-A- 2 209 413
- DE-A- 3 935 778
- DE-A- 4 408 270
- US-A- 5 461 913
- E.APPEL: "Un débitmètre avec petite résistance pour mesurer la ventilation pulmonaire humaine" INTERNATIONAL CONFERENCE ON BIOMEDICAL TRANSDUCERS; BIOCAPT 1975, vol. 1,2, 3 - 7 novembre 1975, pages 389-394, XP002137426 paris

## Description

La présente invention concerne de façon générale un capteur permettant de déterminer la présence d'un flux gazeux. La présente invention concerne plus particulièrement la détection de la présence, du sens d'écoulement, et/ou du débit (en masse ou en volume) d'un flux gazeux dans une conduite.

De tels capteurs sont par exemple divulgés dans DE-A-4408270 et US-A-5 461 913.

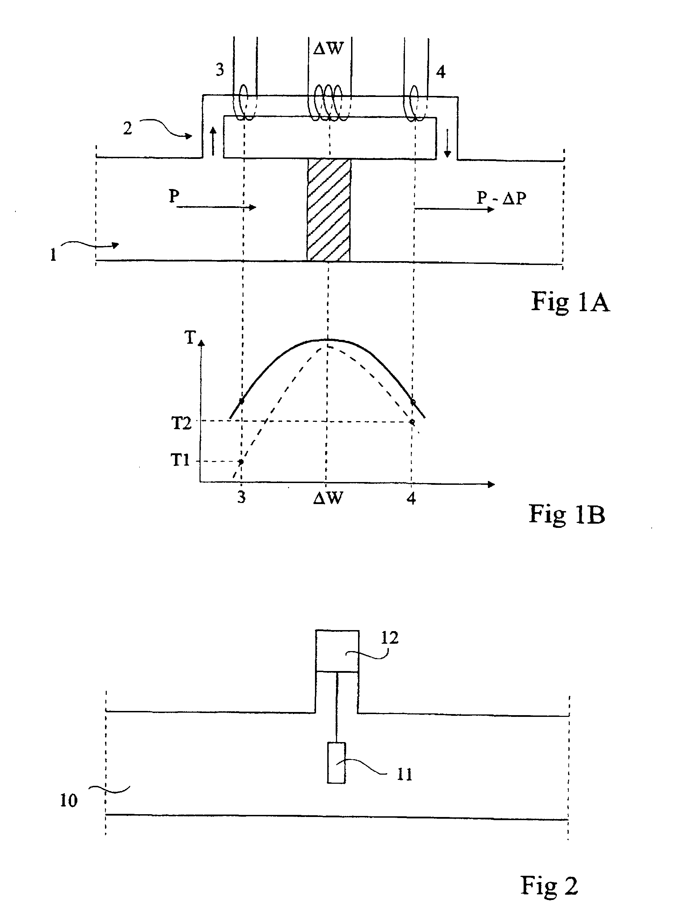

La figure 1A illustre un capteur connu de sens d'écoulement d'un gaz circulant dans une conduite 1. On suppose ci-après à titre d'exemple que le sens de circulation du gaz est tel qu'indiqué par les flèches, de gauche à droite. La conduite 1 est équipée d'un conduit de dérivation 2. Sensiblement au centre du conduit 2 est disposé un moyen de chauffage ΔW. De part et d'autre du moyen de chauffage ΔW, sont disposés de façon symétrique des moyens de mesure 3 et 4 de la température du gaz.

La figure 1B représente l'allure de la variation de la température T dans le conduit 2. En l'absence de gaz, ou en présence d'un gaz immobile (débit nul), le profil de température dans le conduit 2 est symétrique, comme cela est représenté en figure 1B en trait continu. Plus particulièrement, la température est identique au niveau des détecteurs 3 et 4 et est maximale au niveau du moyen de chauffage ΔW.

Lorsqu'un gaz circule dans la conduite 1 et dans le conduit 2, ce profil devient dissymétrique. Un exemple d'une telle dissymétrie est représenté en traits pointillés. La température T1 au niveau du détecteur 3 devient inférieure à celle T2 au niveau du détecteur 4. On obtient ainsi simplement une indication du sens d'écoulement d'un flux gazeux. De plus, il est possible de relier les variations de température par rapport à l'équilibre au niveau de chacun des détecteurs T1 et T2 à la valeur du débit.

Les étalonnages correspondants sont limités à des plages restreintes.

Le système des figures 1A et 1B présente de nombreux inconvénients. Il impose de prévoir une dérivation ainsi qu'une perte de charge dans la conduite 1. Cette perte de charge ΔP (correspondant sensiblement à la partie hachurée de la figure 1A) est nécessaire pour qu'une partie du gaz soit dérivée dans le conduit 2. Elle perturbe donc désavantageusement les conditions de pression dans la conduite 1 en amont (P) et en aval (P-ΔP) du capteur, comme l'illustre la figure 1A. De plus, elle entraîne des mises à l'équilibre en pression et température relativement longues. Ces phénomènes sont d'autant plus gênants que les débits à mesurer sont faibles.

Un tel capteur présente une faible dynamique. Il ne pourra être étalonné que dans des plages relativement étroites, par exemple de 1 à 10 litres par heure.

À côté de ces systèmes de détermination du sens et du débit d'un flux gazeux, il existe des dispositifs plus simples de mesure du seul débit gazeux. La figure 2 illustre un exemple d'un tel dispositif.

On considère une conduite 10 dans laquelle est susceptible de circuler un gaz. On dispose sensiblement au centre de la conduite 10 un élément chauffé 11 de petites dimensions. On conçoit que, pour un gaz donné, de température donnée, les pertes thermiques de l'élément 11 augmentent avec le débit.

L'élément 11 est relié à un module de commande et de traitement 12. Le module 12 assure plusieurs fonctions. En particulier, il commande le chauffage de l'élément 11, effectue et traite des mesures.

L'énergie nécessaire au maintien de la température de l'élément 11 ou les variations de la température d'un élément 11 recevant une énergie constante sont reliées au débit du gaz par des relations connues. Il est donc possible à partir d'une mesure d'énergie à température ou de température à énergie constante de calculer le débit.

Les dispositifs pratiques utilisant le principe décrit en relation avec la figure 2 s'avèrent relativement complexes, encombrants et coûteux. Ils nécessitent en outre de prévoir une mesure de la température du gaz en circulation. En effet, il faut éviter de fausses détections de diminution/augmentation du débit correspondant en fait à un échauffement/refroidissement général du gaz. Par ailleurs, de tels capteurs ne permettent pas la mesure du sens du débit.

Il existe aussi des capteurs destinés à déterminer la présence de particules gazeuses. Par exemple, pour la détection de fuite dans une conduite cryogénique protégée de la température ambiante par une enceinte sous vide, on cherche à détecter la présence de molécules de gaz dans l'enceinte. Pour cela, on peut utiliser des systèmes de surveillance mesurant la pression de l'enceinte ou bien des systèmes à spectromètre de masse.

De tels systèmes sont relativement coûteux et nécessitent de pratiquer une ouverture donnant accès au vide de l'enceinte. Dans le cas de dispositifs fixes placés dans l'enceinte sous vide, les procédés de montage sont particulièrement complexes afin d'assurer la communication avec des unités de commande et de traitements extérieures à l'enceinte sous vide.

Un objet de la présente invention est de proposer un nouveau capteur de présence ou d'absence d'un flux gazeux, ce capteur étant en outre susceptible de fournir le sens et/ou le débit de ce flux, ce capteur palliant un ou plusieurs des inconvénients des capteurs connus.

Un autre objet de la présente invention est de proposer un tel capteur de grande sensibilité.

Un autre objet de la présente invention est de proposer un tel capteur de dynamique importante.

Un autre objet de la présente invention est de proposer un tel capteur induisant des pertes de charge négligeables.

Un autre objet de la présente invention est de proposer un tel capteur susceptible de détecter des fuites dans une conduite cryogénique et externe à l'enceinte de protection de la conduite.

Pour atteindre ces objets, la présente invention prévoit un capteur de présence ou d'absence d'un flux gazeux, comprenant deux thermistances, collées dos à dos sur un même support, connectées en série entre une ligne d'alimentation haute et une ligne d'alimentation basse, leur point de connexion étant relié à un potentiel médian par l'intermédiaire d'une résistance de détection.

Selon un mode de réalisation de la présente invention, les thermistances sont du type à coefficient de température positif.

Selon un mode de réalisation de la présente invention, des résistances réglables sont connectées en parallèle sur chacune des thermistances.

Selon un mode de réalisation de la présente invention, le capteur comprend en outre un moyen de détermination de la valeur du courant dans la résistance de détection.

Selon un mode de réalisation de la présente invention, le capteur est disposé dans une conduite de gaz de sorte que le plan de séparation des deux thermistances est orthogonal à la direction d'écoulement du flux gazeux.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1A, 1B et 2 décrites précédemment sont destinées à exposer l'état de la technique et les problèmes liés ;
la figure 3 est une courbe de variation de la résistance d'une thermistance à coefficient de température positif en fonction de la température ;
la figure 4 illustre un capteur selon la présente invention disposé dans une conduite ;
la figure 5 représente un schéma électrique d'un capteur selon la présente invention ;
la figure 6 illustre un mode de réalisation d'un détecteur de flux gazeux comprenant le capteur selon la présente invention ;
la figure 7 illustre un mode de réalisation d'un détecteur de sens d'un flux gazeux comprenant le capteur selon la présente invention ;
la figure 8 illustre schématiquement un mode de réalisation d'un débitmètre massique utilisant le capteur selon la présente invention ; et
la figure 9 illustre un mode de réalisation d'un détecteur de fuite, selon la présente invention, disposé sur une conduite cryogénique.

Une caractéristique de la présente invention est de prévoir un nouveau capteur comprenant deux thermistances collées dos à dos sur un support isolant, par exemple en verre ou résine époxy, reliées à une même masse.

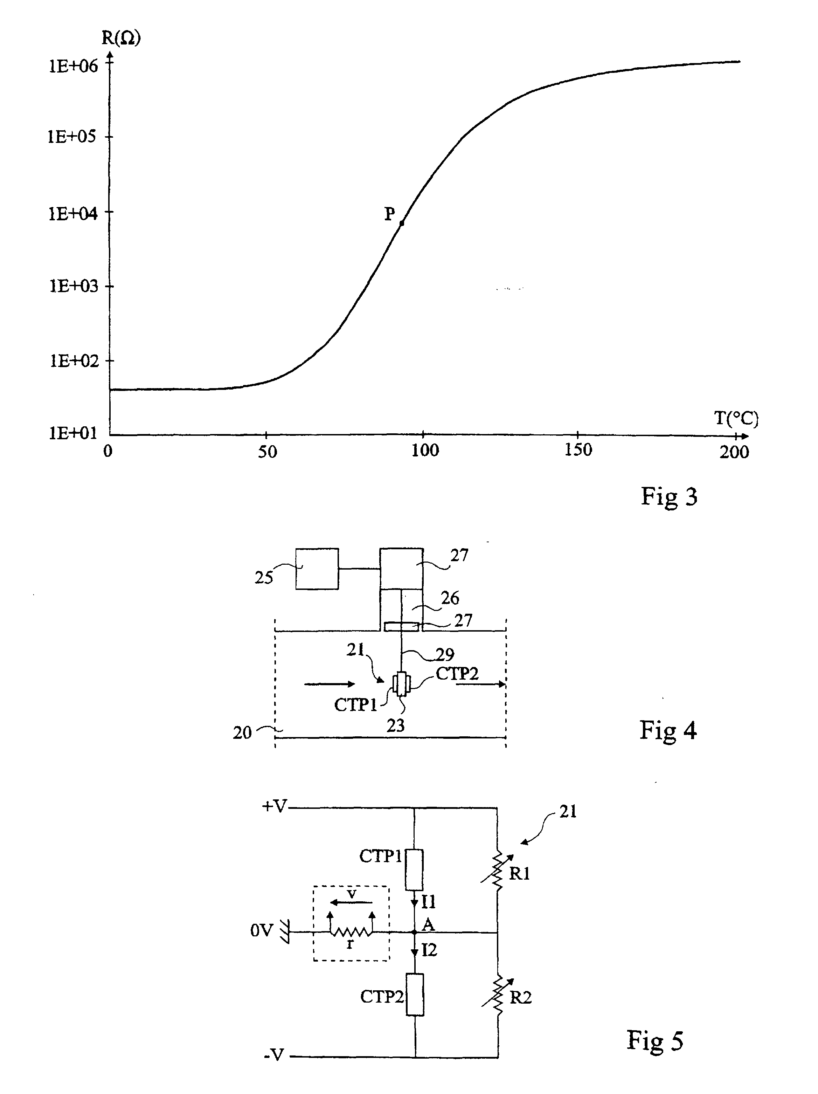

On utilise des thermistances à coefficient de température positif (thermistances CTP). La figure 3 illustre schématiquement la variation de la résistance d'une thermistance en fonction de la température. Toute thermistance CTP présente un point de fonctionnement P autour duquel la résistance varie très fortement et de façon sensiblement linéaire pour de faibles variations de températures. Par exemple, la thermistance CTP fabriquée et commercialisée par la société Philips sous la référence 2322 671 910 03 présente une résistance qui varie entre 800 Ω et 100 kΩ pour des variations de température dans une plage de seulement 40°C comprise entre 80 et 120°C.

La figure 4 représente un capteur 21 selon la présente invention disposé dans une conduite 20 dans laquelle un gaz, tel que de l'hélium ou de l'azote, est susceptible de circuler. On supposera à titre d'exemple que le gaz se déplace, comme cela est indiqué par les flèches, de la gauche vers la droite. Le capteur 21 est inséré de façon à se trouver, en vue en coupe transversale, sensiblement au centre de la conduite 20.

Le capteur 21 comprend deux thermistances CTP1 et CTP2 collées dos à dos sur un support isolant 23 orthogonal à l'axe de la conduite. Le support 23 isole les thermistances CTP1 et CTP2 l'une de l'autre au moins à l'encontre de variations thermiques à court terme. En présence d'un flux gazeux, la thermistance non exposée directement au flux est refroidie beaucoup moins fortement que l'autre, car elle est protégée par le vortex créé au niveau du capteur. La forme du support 23 pourra être optimisée pour favoriser cet effet.

Le capteur 21 est connecté électriquement à un module de commande et de mesure 25. En pratique, le capteur 21 est introduit dans la conduite 20 par un orifice 26 associé à un dispositif de bouchage 27. Des connexions électriques entre le capteur 21 et le module 25 passent dans un tube 29 de dimensions minimales.

On comprendra que le refroidissement différent des deux thermistances produise une différence de température entre elles si elles sont alimentées de façon identique. Cette différence de température provoque une différence de valeur des résistances des thermistances. Cette différence pourra être détectée pour indiquer la présence d'une circulation gazeuse, son sens d'écoulement et son débit.

On préfère utiliser des thermistances CTP plutôt que des thermistances à coefficient de température négatif (CTN) car, sous tension constante, elles s'autorégulent en température. En effet, si la température diminue, alors la résistance de la thermistance CTP diminue, ce qui implique que la puissance dissipée V²/R augmente et ramène la température à son point de fonctionnement. Inversement, si la température augmente, alors la résistance augmente et la puissance dissipée diminue, ramenant la CTP à une température plus basse. C'est la tension d'alimentation qui fixe le point de fonctionnement. La régulation est donc automatique.

De plus, des thermistances CTP de petites dimensions sont particulièrement avantageuses car elles nécessitent des puissances plus faibles pour les amener à leur point de fonctionnement.

Un exemple de montage du capteur selon l'invention est illustré schématiquement en figure 5. Les thermistances CTP1 et CTP2 sont connectées en série entre deux lignes d'alimentation respectivement positive et négative +V et -V. Le point de connexion A des thermistances CTP1 et CTP2 est relié à une masse du dispositif (0 V). Plus généralement, les deux thermistances CTP1 et CTP2 sont connectées en série entre une ligne à un potentiel haut et une ligne à un potentiel bas et leur point milieu est relié au potentiel médian. Les alimentations positive (+V), nulle (la masse) et négative (-V) seront par exemple des alimentations à +12 V, 0 V et -12 V prélevées aux bornes d'un pont redresseur à partir du secteur.

Une résistance de détection r, aux bornes de laquelle apparaît une tension de détection v, est disposée entre le point A et la masse. De préférence des résistances réglables R1 et R2 sont connectées en parallèle sur chaque thermistance.

Dans la résistance de détection r circule la différence i entre le courant I1 dans la thermistance CTP1 et le courant I2 dans la thermistance CTP2.

Les tensions d'alimentation des thermistances étant constantes et identiques, chacun des courants I1 et I2 est seulement fonction de la valeur de la résistance de chacune des thermistances CTP1 et CTP2, c'est-à-dire de la température de ces thermistances qui dépend de la présence ou non d'un gaz et d'un flux gazeux.

Les thermistances CTP1 et CTP2 sont de préférence choisies de sorte que leur point de fonctionnement sous la tension V corresponde à une température sensiblement 20 à 30°C supérieure à celle du gaz.

En l'absence de circulation gazeuse, comme les thermistances CTP1 et CTP2 sont de même type et choisies dans un même lot, et sont alimentées sous une même tension, elles sont traversées par un même courant et le courant i est nul. Toutefois les résistances R1 et R2 permettent de corriger une éventuelle erreur de zéro.

Quand un gaz circule de gauche à droite dans la conduite 20, la thermistance CTP1 est refroidie plus que la thermistance CTP2. Alors, il apparaît dans la branche de masse un courant de déséquilibre i.

Toute variation du courant i est liée à, et seulement à, une variation du débit du gaz. En effet, si la température d'un gaz au repos varie, aucun courant de déséquilibre n'apparaît, les deux thermistances variant de la même façon. Un avantage du capteur selon la présente invention est donc qu'il n'est pas nécessaire de mesurer la température du gaz.

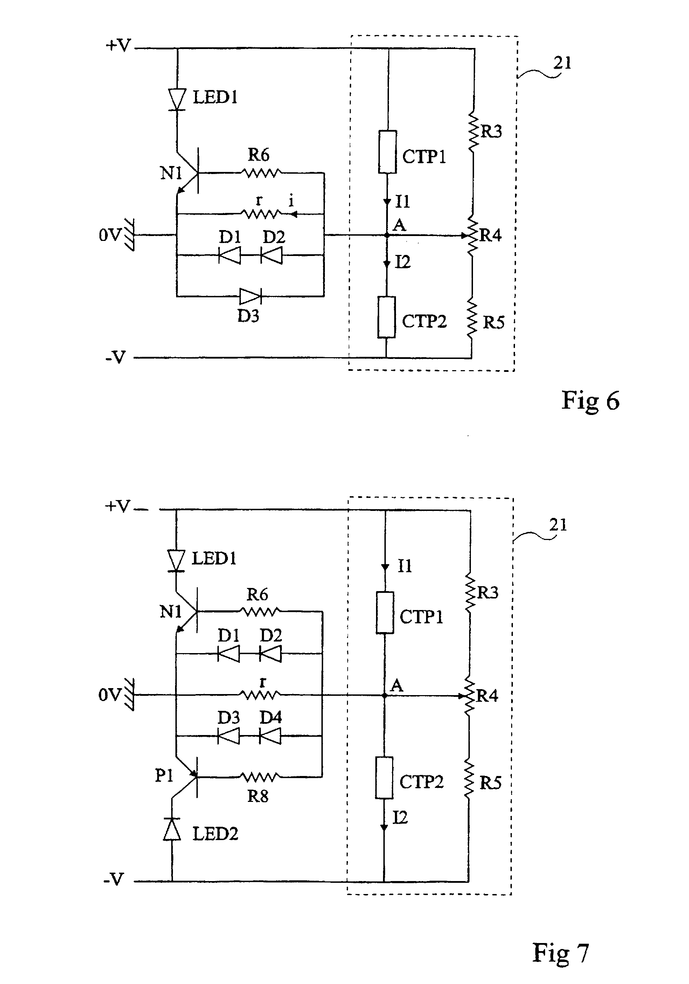

On va maintenant décrire en relation avec les figures 6 à 8 divers types de montages de mesure du courant i circulant dans la résistance r ou de la tension v à ses bornes.

Le montage de la figure 6 représente un mode de réalisation d'un détecteur unidirectionnel de flux gazeux, c'est-à-dire un détecteur permettant d'indiquer s'il existe ou non un flux gazeux dans un sens déterminé. Ce détecteur permet d'indiquer s'il existe un courant i positif dans la résistance r.

Les résistances réglables R1 et R2 (figure 5) sont avantageusement réalisées par la connexion série de deux résistances fixes R3 et R5 séparées par un rhéostat en série avec elles. La prise intermédiaire du rhéostat R4 est reliée au point A.

Le circuit comprend un interrupteur commandé, par exemple un transistor bipolaire N1. La base et l'émetteur du transistor N1 sont reliés aux bornes de la résistance r. Le collecteur du transistor N1 est connecté à la cathode d'une diode électroluminescente LED1 dont l'anode est reliée à la ligne d'alimentation positive +V.

On pourra en outre prévoir des diodes de protection D1 à D3. Les diodes D1 et D2 sont connectées en série l'une avec l'autre, en parallèle sur la résistance r. La cathode de la diode D1 est reliée à la masse et l'anode de la diode D2 est connectée au point A. La diode D3 est connectée en antiparallèle avec les diodes D1 et D2, c'est-à-dire que la cathode de la diode D3 est reliée au point A et son anode à la masse.

Une résistance R6 permet de limiter le courant de base du transistor N1. Les diodes D1, D2 et D3 empêchent la tension base-émetteur de devenir trop importante.

Si le courant i est nul, la tension base-émetteur est nulle et le transistor N1 est ouvert.

Si le courant i est négatif, la tension base-émetteur est négative et le transistor N1 est également bloqué. Le courant i circule par la diode D3.

Si le courant i est positif, la tension base-émetteur est positive et le transistor N1 devient passant dès que cette tension dépasse un seuil. Un courant passe alors dans la diode électroluminescente LED1, de préférence limité par une résistance non représentée. La diode LED1 s'allume et signale la présence du courant i.

Le montage de la figure 7 représente un mode de réalisation d'un détecteur bidirectionnel de flux gazeux, c'est-à-dire un détecteur permettant d'indiquer s'il existe un flux gazeux et dans quel sens. Ce détecteur permet d'indiquer s'il existe un courant positif ou un courant négatif dans la résistance r. Ce montage double le système de détection représenté en figure 6. Plus particulièrement, le détecteur de la figure 6 comprenant un transistor NPN N1, des diodes D1-D2, une résistance R6 et une diode électroluminescente LED1 est complété par un circuit symétrique comprenant un transistor PNP P2, des diodes D3-D4, une résistance R8, et une diode électroluminescente LED2.

On comprendra que selon le sens de circulation du courant i - au-dessus d'un certain seuil - l'une ou l'autre des diodes électroluminescentes LED1 et LED2 s'allume.

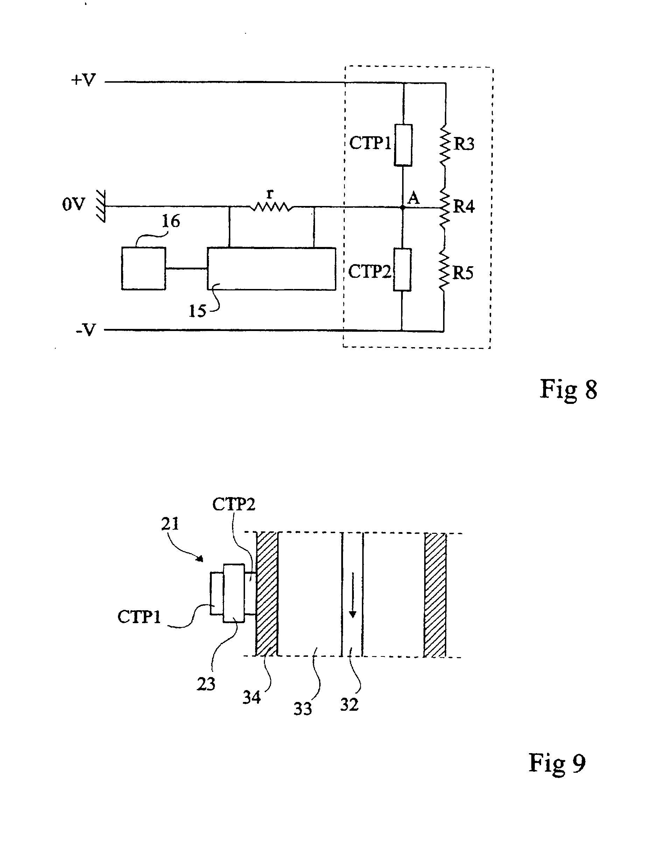

Le montage de la figure 8 représente un mode de réalisation d'un détecteur bidirectionnel du sens et du débit d'un flux gazeux. Aux bornes de la résistance r est connecté un convertisseur analogique-numérique 15 associé à des moyens d'étalonnage, relié à un afficheur numérique 16. Le convertisseur analogique-numérique 15 peut être associé à un circuit d'élévation au carré.

Un étalonnage préalable d'un tel détecteur permet de relier la valeur du courant de déséquilibre courant au débit horaire massique ou volumétrique d'un gaz. Par exemple, pour de l'hélium, la relation entre la vitesse du flux et le carré du courant s'est révélée être parfaitement reproductible, fiable et précise. Cette relation est en outre parfaitement linéaire à partir d'un débit volumique aussi faible que un litre par heure (1 l/h) et jusqu'à des débits aussi importants que 1200 l/h. Le capteur selon l'invention présente donc une dynamique particulièrement grande.

Outre un gain important en termes dynamiques, le capteur selon la présente invention présente de nombreux autres avantages.

Mis en place dans une conduite, un capteur selon l'invention induit des pertes de charge très faibles.

Le capteur selon l'invention est utilisable dans différents détecteurs sans recourir à une quelconque référence externe. Cela réduit le nombre d'éléments placés dans le flux gazeux. Les pertes de charges sont donc encore réduites. De même, le nombre de dispositifs mécaniques et/ou électroniques est réduit.

La mesure à effectuer pour connaître la valeur du flux est particulièrement simple attendu qu'il s'agit directement de la mesure d'un courant. Aucune comparaison ni traitement supplémentaire n'est nécessaire.

Bien entendu, la présente invention est susceptible de diverses variantes et modifications qui apparaîtront à l'homme de l'art. En particulier, le capteur selon l'invention peut être utilisé dans différentes applications en présence d'un flux d'un gaz, telles que, par exemple, des dispositifs de sécurité. Par ailleurs, un capteur selon l'invention peut être associé à des moyens propres à réguler un débit en association avec une vanne d'asservissement.

La figure 9 illustre un autre exemple d'application d'un capteur 21 selon l'invention relié à un module de commande et de traitement non représenté.

La figure 9 représente en coupe une conduite cryogénique 32 dans laquelle circule un fluide à très basse température. La conduite 32 est isolée de l'atmosphère environnante par une enceinte sous vide 33. Le capteur 21 selon l'invention est placé de sorte que l'une des deux thermistances, par exemple CTP2, soit en contact avec la surface externe de la paroi 34 de l'enceinte 33.

Si pendant la circulation d'un gaz dans la conduite 32 celle-ci se perce, il se produit dans l'enceinte 33 des phénomènes de convection qui induisent un refroidissement de la thermistance CTP2 en contact avec la paroi 34 de l'enceinte 33. Alors, la température de la thermistance CTP2 diminuant, sa résistance diminue et le courant I2 tend à augmenter. Il apparaît alors un déséquilibre qui peut être détecté par tout moyen approprié pour signaler une fuite dans l'enceinte 11.

## Revendications

1. Capteur (21) de présence ou d'absence d'un flux gazeux, **caractérisé en ce qu'**il comprend deux thermistances (CTP1, CTP2), collées dos à dos sur un même support (23), connectées en série entre une ligne d'alimentation haute (+V) et une ligne 5 d'alimentation basse (-V), leur point de connexion (A) étant relié à un potentiel médian (0 V) par l'intermédiaire d'une résistance de détection (r).

2. Capteur selon la revendication 1, **caractérisé en ce que** les thermistances (CTP1, CTP2) sont du type à coefficient de température positif.

3. Capteur selon la revendication 1, **caractérisé en ce que** des résistances réglables (R1, R2) sont connectées en parallèle sur chacune des thermistances (CTP1, CTP2).

4. Capteur selon la revendication 1, **caractérisé en ce qu'**il comprend en outre un moyen de détermination de la valeur du courant (i) dans la résistance de détection (r).

5. Une conduite de gaz (20) comprenant un capteur selon la revendication 1 disposé dans la conduite de gaz de manière à ce que le plan de séparation des deux thermistances (CTP1, CTP2) est orthogonal à la direction d'écoulement du flux gazeux.

## Patentansprüche

1. Ein Sensor (21) zum Abfühlen des Vorhandenseins oder Nichtvorhandenseins einer Gasströmung **dadurch gekennzeichnet, dass** er zwei Thermistoren (CTP1, CTP2) aufweist, die Rücken an Rücken an einem gleichen Träger (23) angeklebt sind, die zwischen einer Versorgungsleitung mit hoher Spannung (+V) und einer Versorgungsleitung mit niedriger Spannung (-V) in Serie geschaltet sind, und deren Verbindungspunkt (A) über einen Detektionswiderstand (r) mit einer mittleren Spannung (0 V) verbunden ist.

2. Sensor nach Anspruch 1 **dadurch gekennzeichnet, dass** die Thermistoren (CTP1, CTP2) zu einer Bauart mit einem positiven Temperaturkoeffizienten gehören.

3. Sensor nach Anspruch 1 **dadurch gekennzeichnet, dass** einstellbare Widerstände (R1, R2) parallel zu jedem der Thermistoren (CTP1, CTP2) geschaltet sind.

4. Sensor nach Anspruch 1 **dadurch gekennzeichnet, dass** ferner Mittel vorgesehen sind, um den Wert des Stromes (i) in dem Detektionswiderstand (r) zu bestimmen.

5. Eine Gasleitung (20) mit einem Sensor gemäß Anspruch 1, und zwar angeordnet in der Gasleitung derart, dass die Trennungsebene der zwei Thermistoren (CTP1, CTP2) orthogonal zur Gasströmungsrichtung verläuft.

## Claims

1. A sensor (21) of the presence or the absence of a gas flow, **characterized in that** it includes two thermistors (CTP1, CTP2), glued back to back on a same support (23), connected in series between a high supply line (+V) and a low supply line (-V), their connection point (A) being connected to a median voltage (0 V) via a detection resistor (r).

2. The sensor of claim 1, **characterized in that** the thermistors (CTP1, CTP2) are of type having a positive temperature coefficient.

3. The sensor of claim 1, **characterized in that** adjustable resistors (R1, R2) are connected in parallel on each of the thermistors (CTP1, CTP2).

4. The sensor of claim 1, **characterized in that** it further includes means for determining the value of the current (i) in the detection resistor (r).

5. A gas duct (20) including the sensor of claim 1, arranged in the gas duct so that the separation plane of the two thermistors (CTP1, CTP2) is orthogonal to the gas flow direction.
